# EUROPÄISCHE PATENTSCHRIFT

(11) **EP 2 219 987 B1**
(45) Veröffentlichungstag und Bekanntmachung des Hinweises auf die Patenterteilung: **11.05.2011**
(21) Anmeldenummer: 08850715.7
(22) Anmeldetag: 14.11.2008
(51) Int. Cl.: B66C 9/16, F16C 23/10

(54) **FÜHRUNGSROLLENANORDNUNG FÜR KRÄNE**
GUIDE-ROLLER ARRANGEMENT FOR CRANES
ENSEMBLE DE ROULEAUX DE GUIDAGE POUR GRUES

(30) Priorität: 14.11.2007 DE 102007054693
(43) Veröffentlichungstag der Anmeldung: 25.08.2010
(73) Patentinhaber: Konecranes Plc, 05830 Hyvinkää (FI)
(72) Erfinder: GOLDER, Markus, 76275 Ettlingen (DE)
(74) Vertreter: Rüger, Barthelt & Abel Patentanwälte
(86) Internationale Anmeldenummer: PCT/EP2008/009648
(87) Internationale Veröffentlichungsnummer: WO 2009/062730

(56) Entgegenhaltungen:
- AT-B- 284 396
- DE-A1- 4 036 168
- GB-A- 2 066 763
- US-A- 3 606 029

## Beschreibung

Brückenkräne laufen auf parallel zueinander ausgerichteten Kranschienen, die neben den Enden der Kranbrücke installiert sind. Die Kranbrücke erstreckt sich zwischen zwei parallel zueinander ausgerichteten Krankopfträgern, an denen die Kranräder drehbar gelagert sind. Dabei wird unterschieden zwischen den Kranrädern, die die Last aufnehmen und somit die eigentlichen Kranräder sind, und Führungsrollen, die den Krankopfträger auf der Schiene halten. Die seitliche Führung soll mit Rücksicht auf den Verschleiß am Schienenkopf nicht über das Kranrad erfolgen, d.h. dessen Spurkränze sollen nicht mit dem Krankopf in Berührung kommen. Hierdurch würde eine gleitende Reibung zustande kommen, die den Spurkranz oder den Schienenkopf vorzeitig verschleißen lässt. Die Führungsrollen dagegen vermeiden solche gleitenden Reibungen.

Damit die Führungsrollen ihre Funktion erfüllen können, müssen sie genau ausgerichtet werden. Die eingestellte Position der Führungsrollen sollte schließlich durch Formschluss gesichert sein.

Aus der AT 284 396 B ist eine Einrichtung zur Lagerung der Führungsrollen von Schienenfahrzeugen mit spurkranzlosen Laufrädern, insbesondere von Förderanlagen, wie zum Beispiel Laufkranen und dergleichen bekannt, bei der die durch den Wegfall der Spurkränze auftretenden Führungsprobleme dadurch einer Lösung zugeführt werden sollen, dass die Führungsrollen in Richtung zur Schienenseitenfläche einstellbar sind. Dazu sind die Führungsrollen beidseitig einer Schiene auf einen schwenkbaren Quersträger angeordnet, der nach Einstellung des Laufspiels feststellbar ist.

Ausgehend hiervon ist es Aufgabe der Erfindung eine neue Führungsrollenanordnung zu schaffen, mit der auf einfache Weise die formschlüssige Fixierung der richtigen Einstellposition der Führungsrollen möglich ist.

Diese Aufgabe wird erfindungsgemäß mit einer Führungsrollenanordnung mit den Merkmalen des Anspruches 1 oder des Anspruches 2 gelöst.

Die neue Führungsrollenanordnung weist eine Trägerplatte auf, die eine Aufnahmeöffnung oder -bohrung und eine Befestigungsöffnung enthält. Die Befestigungsöffnung ist seitlich neben der Aufnahmebohrung achsparallel zu dieser enthalten. Die Führungsrolle sitzt auf einem Achsträger, der neben der Führungsrolle eine Außenverzahnung trägt. Die Außenverzahnung erstreckt sich längs eines Kreises, dessen Achse gegenüber der Drehachse der Führungsrolle achsparallel seitlich versetzt ist. Es wird auf diese Weise eine Art Exzenterverstellung erreicht.

Die formschlüssige Fixierung geschieht mit Hilfe einer ringförmigen Sicherungsplatte. Die Sicherungsplatte ist mit einer Innenverzahnung versehen, die über die Außenverzahnung des Achsträgers spielarm passt. Außerdem enthält die Sicherungsplatte eine Befestigungsöffnung zur Aufnahme einer Schraube, die in die Befestigungsöffnung der Trägerplatte führt, um die Sicherungsplatte an der Trägerplatte festzulegen. Der Eingriff zwischen der Außenverzahnung des Achsträgers und der Innenverzahnung der Sicherungsplatte bildet einen Formschluss ebenso wie die Art der Befestigung der Sicherungsplatte an der Trägerplatte. Eine einmal eingestellte Exzenterlage des Achsstummels, auf dem die Führungsrolle sitzt, gegenüber der Aufnahmebohrung, durch die der Achsträger hindurch führt, ist somit formschlüssig gesichert und kann sich im Laufe des Betriebs nicht mehr verstellen.

Damit der gewünschte spielarme Eingriff zustande kommt, entspricht der Fußkreisdurchmesser der Innenverzahnung dem Kopfkreisdurchmesser der Außenverzahnung an dem Achsträger. Unter Fußkreisdurchmesser der Innenverzahnung ist hier jener gedachte Kreis zu verstehen, auf dem die Scheitel der Zahnlücken zwischen benachbarten radial nach innen vorstehenden Zähnen liegen.

Die Zähne oder Zahnlücken sind bevorzugt Eckbereiche aus einem entsprechenden regulären Polygon.

Eine noch feinere Abstufung der Einstellung lässt sich erreichen, wenn die Trägerplatte oder die Sicherungsplatte wenigstens zwei Befestigungsöffnungen enthält, die in Umfangsrichtung um einen Winkel bezogen auf die Achse der Aufnahmebohrung versetzt sind, die gleich einem Vielfachen des Abstandes zwischen zwei benachbarten Zähnen der Innenverzahnung zuzüglich ein Mal der Hälfte des winkelmäßigen Abstands ist.

Eine andere Möglichkeit, eine sehr feine Verstellung zu erreichen geschieht bei einer ähnlichen Konstruktion, wobei jedoch die Außenverzahnung des Achsträgers nicht unmittelbar in die Innenverzahnung der Sicherungsplatte eingreift. Beide Verzahnungen begrenzen zwischen sich einen Ringspalt, der von einem außen und innen verzahnten Ring ausgefüllt wird. Die Außenverzahnung des Rings stimmt beispielsweise mit der Innenverzahnung an der Sicherungsplatte überein, während die Innenverzahnung am Ring ein ganzzahliges Vielfaches der Außenverzahnung des Achsträgers ist. Wenn darüber hinaus die Innenverzahnung am Ring und die Außenverzahnung am Ring zueinander teilerfremd sind, kann eine Art Noniuseinstellung erreicht werden, was eine sehr feine Verstellung ermöglicht. Die Exzenterverstellung wird dadurch in extrem feinen Stufen möglich.

Die oben gegebene Kurzbeschreibung der Erfindung geht zum leichteren Verständnis davon aus, dass die Innenverzahnung an einem gesonderten Sicherungsring ausgebildet ist. Diese Ausbildung hat durchaus technische Vorteile. Es ist jedoch ohne weiteres möglich, beispielsweise die Innenverzahnung unmittelbar in der Aufnahmeöffnung auszubilden, in der der Achsstummel sitzt.

Eine besonders gute Einstellbarkeit kann erreicht werden, wenn an der Trägerplatte zwei Aufnahmeöffnungen vorgesehen sind, von denen jede auf einer Seite des Schienenkopfes angeordnet ist. Dadurch sind die Führungsrollen auf beiden Seiten einstellbar.

Wenn eine separate Sicherungsplatte verwendet wird, an der die Innenverzahnung ausgebildet ist, kann die Aufnahmeöffnung in der Trägerplatte kreisrund sein, wodurch es möglich ist, den Achsträger in der Nähe der Führungsrolle mit besonderes kleinem Radialspiel zu halten. Bei Verwendung einer Verzahnung ist dies etwas schwieriger und außerdem können eventuell größere Flächenkräfte entstehen.

Die Befestigungsöffnung zum Halten der Sicherungsplatte kann eine Gewindebohrung sein, was die Montage vereinfacht. Eine besonders einfache Befestigung der Trägerplatte an dem Krankopfträger wird erreicht, wenn die Trägerplatte abgewinkelt ist und auf diese Weise gleichzeitig eine Montagefläche für den Krankopfträger bildet.

Der Achsträger kann einen Achsstummel aufweisen, auf dem die Führungsrolle gelagert ist. Die Lagerung kann über Wälzkörper erfolgen, was ein besonders leichtgängiges Rollen der Führungsrollen gewährleistet.

Eine einfache Herstellung des Achsträgers wird erreicht, wenn diese über die gesamte Länge die Verzahnung trägt. Die Verzahnung kann im Falle der Verwendung einer Sicherungsplatte einen zylindrischen Bereich aussparen.

Die Verzahnung an dem Achsträger kann von den Ecken eines regulären Polygons, beispielsweise eines Sechsecks oder eines Achtecks gebildet sein. Die Innenverzahnung ist dazu komplementär und so gestaltet, dass beliebige Steckkombinationen möglich sind.

Der Achsversatz zwischen der Achse der Führungsrolle und der Achse des Kreises längs dem die Verzahnung auf dem Achsträger liegt, beträgt ca. 3 mm bis 25 mm.

Die Zähnenzahl der Innenverzahnung ist um einen Faktor größer als die Zähnezahl der Außenverzahnung, der vorzugsweise zwischen 4 und 8 liegt. Dadurch werden noch genügend große Zähne erreicht, die hinreichend viel Drehmoment übertragen können und leichter herstellbar sind.

Wenn die Innenverzahnung an einer Sicherungsplatte ausgebildet ist, kann diese wenigstens zwei Befestigungsöffnungen aufweisen. Zwischen den beiden Befestigungsöffnungen besteht ein Winkelversatz, der ein ganzzahliges Vielfaches des Wickelversatzes zwischen zwei benachbarten Zähnen der Innenverzahnung ist, zuzüglich einem halben Teilungswinkel. Auf diese Weise kann eine Einstellung erreicht werden, die doppelt so fein ist, wie sie sich aus der Teilung der Innenverzahnung ergibt.

Wenn zwischen der Sicherungsplatte und der Trägerplatte eine Distanzplatte eingefügt ist, können längere Befestigungsschrauben verwendet werden, was der Zuverlässigkeit der Schraubverbindung zuträglich ist.

Der Achsträger kann eine koaxiale Gewindebohrung enthalten, über die er an einer über der Sicherungsplatte oder die Distanzplatte liegenden Montageplatte zu befestigen ist.

Im Übrigen sind Weiterbildungen der Erfindung Gegenstand von Unteransprüchen.

Die Nachfolgende Figurenbeschreibung erläutert Aspekte zum Verständnis der Erfindung. Weitere nicht beschriebene Details kann der Fachmann in der gewohnten Weise den Figuren entnehmen, die insoweit die Figurenbeschreibung ergänzen. Es ist klar, dass eine Reihe von Abwandlungen möglich sind.

Die nachfolgenden Figuren sind nicht unbedingt maßstäblich. Zur Veranschaulichung von Details können möglicherweise bestimmte Bereiche übertrieben groß dargestellt sein. Darüber hinaus sind die Zeichnungen plakativ vereinfacht und enthalten nicht jedes bei der praktischen Ausführung gegebenenfalls vorhandene Detail. Die Begriffe "oben" und "unten" beziehen sich auf die normale Einbaulage bzw. die Terminologie bei Brückenkränen.

In der Zeichnung sind Ausführungsbeispiele des Gegenstandes der Erfindung dargestellt.
- Fig. 1: zeigt einen Brückenkran in einer stark vereinfachten schematischen Darstellung.
- Fig. 2: zeigt ein Ende eines Krankopfträgers zusammen mit den Führungsrollen und einer schematisch angedeute- ten Kranbahnschiene in einer perspektivischen A- sicht von unten.
- Fig. 3: zeigt die Trägerplatte des Krankopfträgers nach Fig. 2 geschnitten in einer Ebene die die Achsen der Füh- rungsrollen enthält.
- Fig. 4: zeigt das Kopfende des Krankopfträgers teilweise aufgeschnitten, in einer perspektivischen Darstel- lung.
- Fig. 5: veranschaulicht in einer Draufsicht auf die Siche- rungsplatte die radiale Lage der Verzahnungen zu der Lage des Achsstummels.
- Fig. 6: zeigt ein alternatives Ausführungsbeispiel mit einem Zwischenring, in einer perspektivischen Darstellung mit Blick auf den Achsstummel.

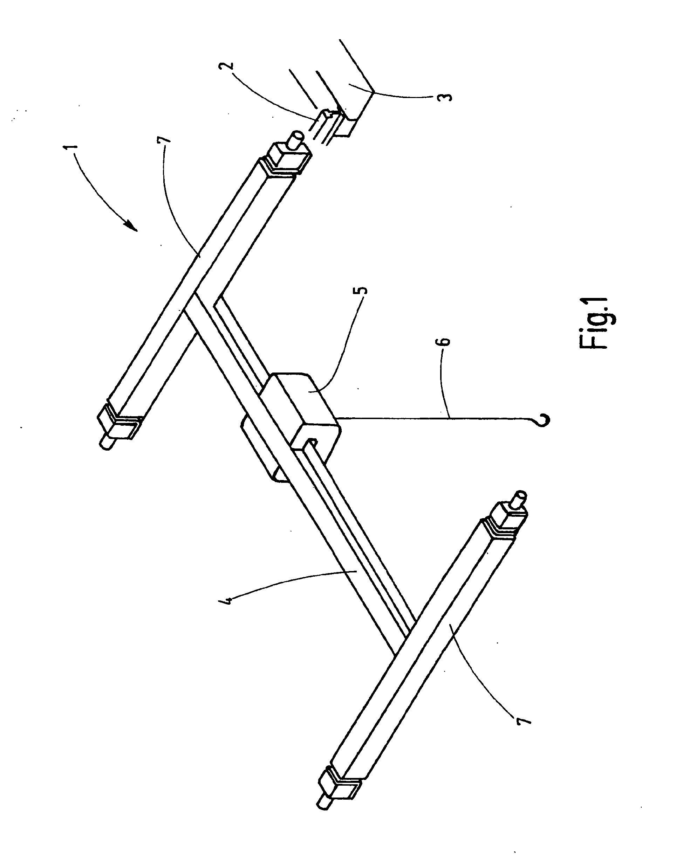

Fig. 1 zeigt stark schematisiert einen Brückenkran 1 der dazu eingerichtet ist, längs zweier Kranbahnschienen 2 zu fahren. Von den Kranbahnschienen 2 ist lediglich eine dargestellt. Die Kranbahnschienen 2 sind parallel zueinander beispielsweise auf Konsolen 3 eines Gebäudes aufgeständert.

Der Brückenkran 1 weist eine gerade Kranbrücke 4 auf, die beispielsweise von einem Doppel-T-Träger gebildet ist. Längs der Kranbrücke 4 fährt eine Katze 5 mit einem darin enthaltenen Hebezeug, von dem ein Seil als Tragmittel 6 herunter hängt.

Die Enden der Kranbrücke 4 sind mit zwei Krankopfträgern 7 verbunden, die an ihren Enden mit Laufrollen 10 und Führungsrollen 11, 12 versehen ist, mit deren Hilfe der Brückenkran 1 auf den Kranbahnschienen 2 läuft bzw. geführt ist.

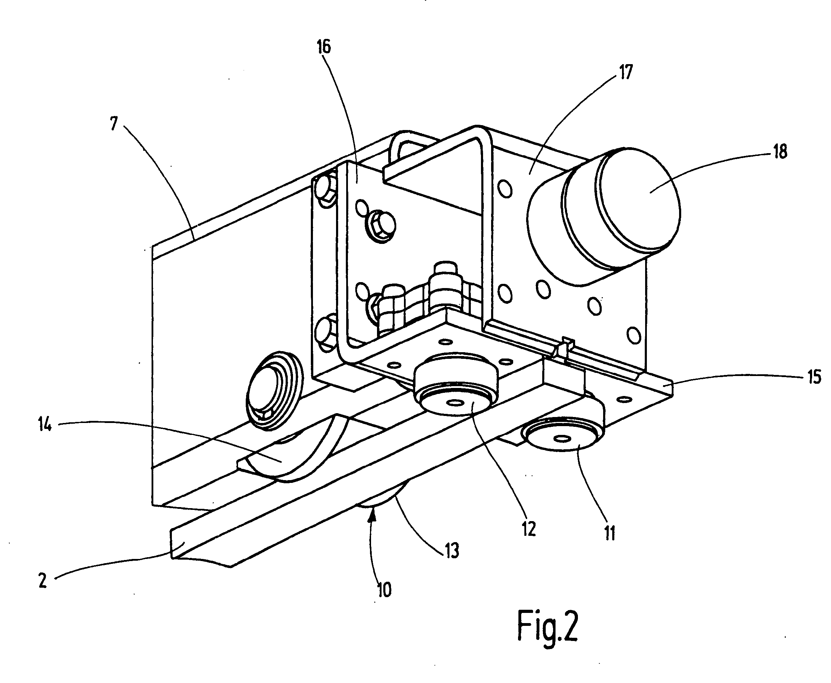

Fig. 2 veranschaulicht eines der Enden eines Krankopfträgers in einer perspektivischen Ansicht von unten. Zu erkennen ist der schematisierte Schienenkopf der Kranbahnschiene 2.

Die Laufrolle 10 ist drehbar in dem rohrförmigen Krankopfträger 7 gelagert und schaut ein Stück weit über die Unterseite des Krankopfträgers vor. Die Laufrolle 10 weist zwei seitliche Spurkränze 13 und 14 auf, die jedoch nur Sicherheitsfunktion haben und an sich den Brückenkran 1 nicht auf der Kranbahnschiene 1 führen sollen. Zur seitlichen Führung sind die beiden Führungsrollen 11, 12 vorhanden, die in einer besonderen Weise einstellbar an einer Trägerplatte 15 gehaltert sind.

Die Trägerplatte ist mit einem abgewinkelten Flansch 16 versehen, mit dessen Hilfe sie am Stirnende des Krankopfträgers 7 befestigt ist. Eine weitere Halteplatte 17, die abgewinkelt ausgeführt ist und beispielsweise mit der Trägerplatte 15 bzw. der Flanschplatte 16 verschweißt ist, trägt einen Sicherheitspuffer 18.

Die gezeigte Anordnung gemäß Fig. 2 befindet sich an jedem Ende jede der beiden Krankopfträger 7.

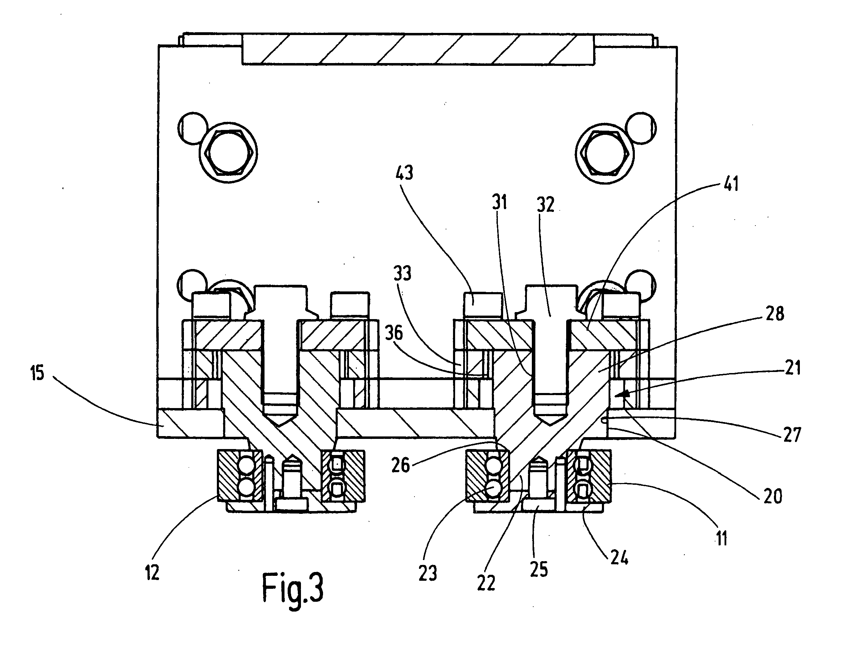

Fig. 3 veranschaulicht in einem Schnitt, der die Achsen der beiden Führungsrollen 11 und 12 enthält die Art und Weise wie die Führungsrollen 11, 12 gelagert und hinsichtlich ihres Seitenspiels gegenüber dem Kopf der Kranbahnschiene 2 einstellbar sind. Die Art der Lagerung/Halterung ist für beide Führungsrollen 11, 12 identisch, so dass es genügt, die Gestaltung im Zusammenhang mit der einen Führungsrolle zu erläutern. Die Beschreibung gilt sinngemäß auch für die andere Führungsrolle, weshalb dort die identischen Bezugszeichen einzutragen wären.

Für die Führungsrolle 11 enthält die Trägerplatte 15 eine Durchgangsbohrung 20 in der ein Achsträger 21 sitzt. Die Aufnahmeöffnung 20 ist eine zylindrische Öffnung, deren Achse vertikal verläuft und die einen genügenden seitlichen Abstand von dem Schienenkopf hat.

Der Achsträger ist einstückig und weist einen Achsstummel 22 auf, auf dem mit Hilfe von Wälzkörpern 23 die ringförmige Führungsrolle 11 drehbar gelagert ist. Ein Deckel 24, der mittels einer in dem Achsstummel 22 eingeschraubten Schraube 25 gesichert ist, hält die Führungsrolle 11 in vertikaler Richtung fest.

Der Achsstummel 22 endet an einer Anlageschulter 26, die die weitere axiale Sicherung für die Führungsolle 11 darstellt. Im Anschluss an den Achsstummel geht der Achsträger 21 in einen zylindrischen Abschnitt 27 über, dessen Höhe der Dicke der Trägerplatte 15 entspricht und dessen Durchmesser gleich dem Innendurchmesser der Aufnahmeöffnung 20 ist. Auf diese Weise ist der Achsträger 21 radial spielfrei und drehbar in der Aufnahmeöffnung 20 aufgenommen.

Die Achse des zylindrischen Abschnitts 27 ist, wie die Figur erkennen lässt, achsparallel gegenüber der Achse des Achszapfens 22 versetzt. Die Achse des Achszapfens 22 fällt mit der Drehachse der Führungsrolle 11 zusammen.

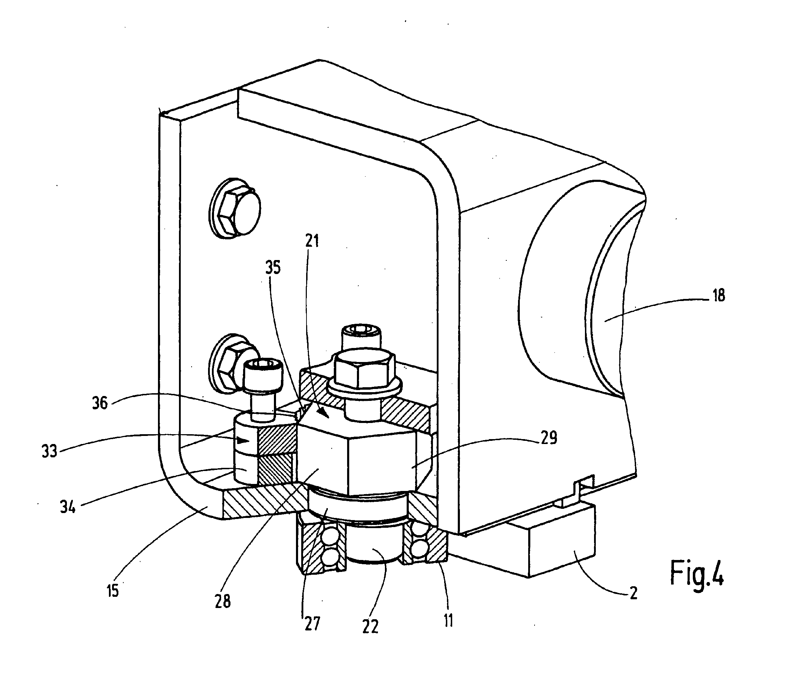

Oberhalb des zylindrischen Abschnitts 27 geht der Achsträger 21 in einen Abschnitt 28 mit einem Querschnitt entsprechend einem regelmäßigen Polygon, einem Sechskant, über, wodurch eine Außenverzahnung 29 entsteht, wie sie Fig. 4 erkennen lässt.

Um jegliches Kippspiel aufzunehmen ist schließlich noch eine Gewindebohrung 31 enthalten, die der Aufnahme einer Befestigungsschraube 32 dient. Die Achse der Gewindebohrung fällt mit der Achse der Außenverzahnung 29 und der Achse des zylindrischen Abschnitts 27 zusammen.

Außerdem lässt die Figur erkennen, dass die Nennweite des Sechskants, der die Verzahnung 29 bildet, etwas größer ist als der Durchmesser des zylindrischen Abschnitts 27, so dass der Achsträger 21 von oben her auf der ebenen Trägerplatte 15 neben der Bohrung 22 aufliegen kann.

Um den Achsträger 21 in der gewünschten Drehposition zu fixieren, ist eine Sicherungsplatte 33 vorgesehen, die mit Hilfe einer Distanzplatte 34 auf Abstand zu der Oberseite der Trägerplatte 15 gehalten ist. Die Sicherungsplatte 33 enthält eine Öffnung 35 mit einer darin ausgebildeten Innenverzahnung 36.

Neben der Durchgangsöffnung 35 enthält die Sicherungsplatte 33 mehrere Gruppen von zylindrischen Befestigungsöffnungen 37. Die Befestigungsöffnungen 37 liegen auf einem gemeinsamen Teilkreis.

Von den insgesamt 8 Befestigungsöffnungen 37 liegen die Befestigungsöffnungen 37a auf den Ecken eines gemeinsamen Quadrates. Die Befestigungsöffnungen 37b liegen ebenfalls auf den Ecken eines eigenen Quadrats. Die so entstehenden zwei Quadrate sind gegeneinander geringfügig verdreht. Die Drehachse, um die die gedachten Quadrate gegeneinander verdreht sind, fällt mit der Achse der Außenverzahnung 29 zusammen. Die Achse der

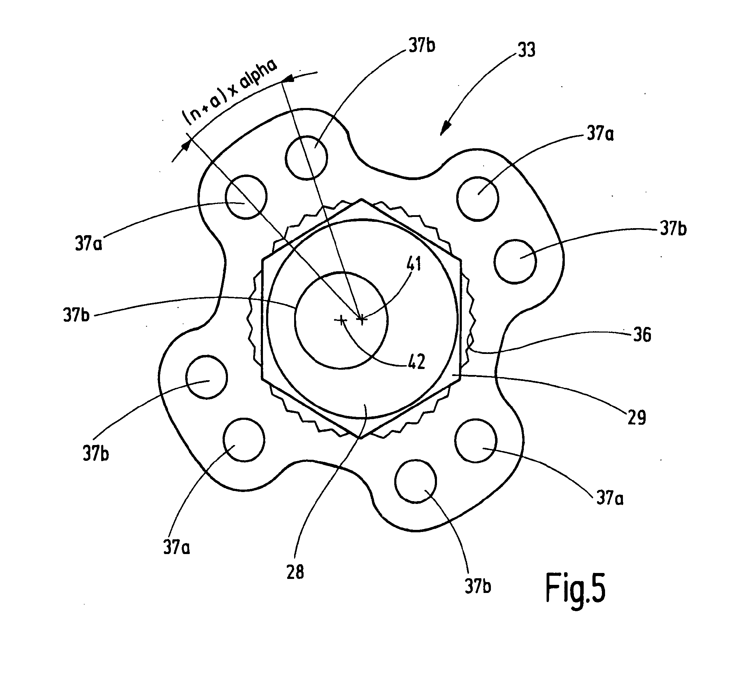

Außenverzahnung 29, die auf der Zeichenebene senkrecht steht, ist durch ein Kreuz 41 in Fig. 4 versinnbildlicht. In dieser Figur ist auch die Achse des Achszapfens 22 eingetragen und zwar als ein Kreuz bei 42. Schließlich lässt Fig. 5 noch den Außenumfang des Achszapfens 22 als Kreis erkennen, der sinngemäß mit dem Bezugszeichen 22 versehen ist, weil der die Außenumgangsfläche des Achszapfens 22 symbolisiert.

Der Drehwinkel um den die beiden Quadrate gedreht sind, ist ein Vielfaches der Zahnteilung der Innenverzahnung 36 zuzüglich dem halben Teilungswinkel zwischen zwei benachbarten Zähnen der Innenverzahnung 36.

Die Befestigungsöffnungen 37 dienen der Aufnahme von Befestigungsschrauben 43, die in entsprechende Gewindebohrungen in der Trägerplatte 15 eingeschraubt sind. Die Gewindebohrungen sind aus Darstellungsgründen in den Figuren nicht zu erkennen. Es handelt sich um insgesamt vier Gewindebohrungen, die um die Aufnahmeöffnung 20 herum verteilt sind, und zwar liegen sie auf einem Teilkreis der zu der Aufnahmebohrung 20 konzentrisch ist und sie sind jeweils um 90° in Umfangsrichtung voneinander beabstandet.

Die zwischen gelegte Distanzplatte 34 entspricht in ihrer Außengestalt der Sicherungsplatte 33 mit der Einschränkung, dass die Innenverzahnung 36 fehlt und statt dessen dort eine glatte zylindrische Bohrung enthalten ist mit einem Durchmesser größer dem Außendurchmesser des Kopfkreises der Außenverzahnung 29. Schließlich liegt auf dem Stapel aus der Distanzplatte 34 und der Sicherungsplatte 33 noch eine Deckelplatte 44.

Die Verwendung der gezeigten Anordnung ist wie folgt:

Bei der Montage wird beispielsweise zunächst der Achsträger 21 von oben her durch die Aufnahmeöffnung 20 in der Trägerplatte 15 hindurch gesteckt. Sodann wird auf den Achsstummel 22 die Führungsrolle 21 von unten her aufgesteckt und über die Schraube 25 unter Zwischenlage der Platte 24 gesichert.

Da der Sechskant 28, dessen Ecken die Außenverzahnung 29 bilden, an jeder Stelle größer ist als der Durchmesser der Aufnahmebohrung 20, kann der Achsträger 21 nicht durch die Aufnahmebohrung 20 hindurch fallen. Er bleibt in jedem Falle mit dem Sechskant 28 auf der Oberseite der Trägerplatte 15 liegen.

Diese Maßnahme wird mit beiden Führungsrollen 11, 12 der Trägerplatte 15 wiederholt.

Die so vorbereitete Trägerplatte 15 kann an den Stirnenden der Krankropfträger 7 befestigt werden.

Nach dem Aufsetzen des Brückenkrans auf die Kranbahnschienen 2 wird die Längsausrichtung der Krankopfträger 7 und das seitliche Führungsspiel des Schienenkopfes zwischen den Führungsrollen 11, 12 eingestellt. Hierzu kann auf den Sechskant 28 ein Schlüssel aufgesetzt werden, um den Sechskant um den Achsträger 21 um seine Längsachse zu drehen. Bei der Drehbewegung vollführt der Achsstummel 22 wegen der exzentrischen Lage zu der Drehachse bzw. der Achse der Aufnahmebohrung eine Lateralbewegung gegenüber der Kranbahnschiene 2. Sobald die richtige Position eingestellt ist, wird von der Oberseite her die Distanzplatte 34 und schließlich die Sicherungsplatte 33 aufgesteckt. Dabei wird für die Sicherungsplatte 33 eine Position gesucht, in der eine möglichst gute Fluchtung zwischen den Befestigungsöffnungen 37 und den korrespondierenden Gewindebohrungen in der Trägerplatte 15 besteht. Der Fehler, der maximal entstehen kann, ist halb so groß wie der Teilungswinkel der Innenverzahnung 36, da am Außenumfang der Sicherungsplatte 33, wie vorhin ausführlich erwähnt, zwei Sätze von Befestigungsöffnungen 37 vorhanden sind, die winkelmäßig um ein ganzzahniges Vielfaches plus einen halben Teilungswinkel gegeneinander versetzt sind.

Nachdem die passenste Aufsteckposition erreicht ist, wird der Achsträger 21 eventuell nochmals ein geringes Stück verdreht, bis die endgültige Fluchtung zwischen den Befestigungsöffnung 37a oder 37b mit den Gewindebohrungen in der Trägerplatte 15 hergestellt ist. Bei dieser Verdrehung wandert der Achszapfen 22 nochmals ein vergleichsweises sehr kleines Stück gegenüber dem Schienenkopf. Schließlich wird die Deckelplatte aufgesetzt und durch die Deckelplatte hindurch werden die Schrauben 43 eingedreht und angezogen. Schließlich wird noch die Schraube 32 eingeschraubt, um den Achsträger 21 in vertikaler Richtung zu fixieren.

Praktische Erfahrungen haben gezeigt, dass ein günstiger Achsversatz zwischen den Achsen 41 und 42 bei ca. 10 mm liegt. Dies bedeutet, bei einem 36-Kant als Innenverzahnung 36 wird eine Abstufung von im ungünstigsten Fall von 1,8 mm je Stufe erreicht. Dieser Wert halbiert sich durch die Verwendung von zwei Sätzen von Befestigungsöffnungen 37a und 37b, die wie erwähnt, gegeneinander in ihrem Bohrbild verdreht sind.

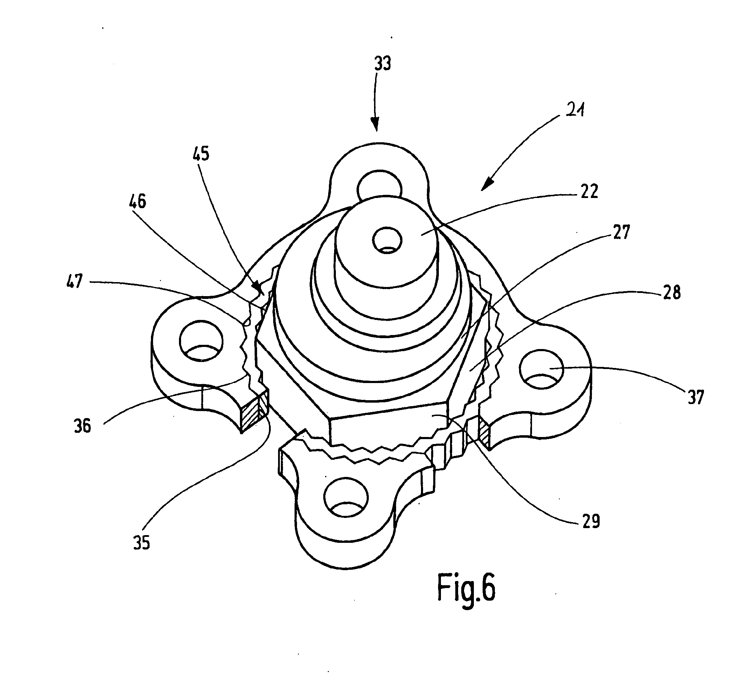

Eine andere Möglichkeit eine sehr feine Stugfung zu erhalten zeigt Fig. 6. In Fig. 6 ist in perspektivischer Darstellung der Achsträger 21 mit Blick auf den Achszapfen 22 veranschaulicht, in Verbindung mit der Sicherungsplatte 33, jedoch ist die Trägerplatte 15 wegegelassen.

Nach der Ausführung nach Fig. 6 hat der Achsträger 21 dieselbe Gestalt wie bei dem zuvor beschriebenen Ausführungsbeispiel. Er setzt sich in axialer Richtung wiederum aus dem Achszapfen 22, dem zylindrischen Abschnitt 27 und dem Sechskant 28 zusammen, dessen Ecken die Verzahnung 29 darstellen. Die Sicherungsplatte 33 unterscheidet sich von dem Ausführungsbeispiel nach Fig. 5 durch die Verwendung von lediglich einem Satz von Befestigungsbohrungen 37, d.h. in dem Beispiel insgesamt nur vier Befestigungsbohrungen 37, die auf den Ecken eines Quadrates liegen, dessen Mittelpunkt mit der Mitte des Sechskants 28 zusammenfallen. Außerdem ist die Öffnung 35 mit der Verzahnung 36 so groß, dass zwischen dem Sechskant 28 und der Innenverzahnung 36 ein Ringspalt entsteht. In dem Ringspalt sitzt ein Zwischenring 45, der eine Innenverzahnung 46 und eine Außenverzahnung 47 trägt. Die Außenverzahnung 47 stimmt in der Teilung und den eine Verzahnung charakterisierenden Kennwerten mit der Innenverzahnung 36 überein. Die Innenverzahnung 46 dagegen entspricht der Innenverzahnung 36 aus dem vorherigen Ausführungsbeispiel, so dass der Zwischenring 45 mit dem Sechskant 28 genauso zusammenwirkt wie dies oben ausführlich erläutert ist. Allerdings ist die Innenverzahnung 36 entsprechend der Außenverzahnung 47 hinsichtlich der Zähnezahl Teilerfremd mit der Innenverzahnung 46. Dadurch wird eine Art Nonius erreicht, der es ermöglicht die Justage noch feinstufiger zu gestalteten.

Die Montage unterscheidet sich von der zuvor beschriebenen Montage dadurch, dass nach dem Anbringen des Achsträgers 21 sogleich der Sicherungsring 33 aufgesetzt wird. Nach dem Justieren des Flankenspiels zwischen der Führungsrolle 11 bzw. 12 und dem Kopf der Kranbahnschiene 2 wird diejenige Stellung gesucht, in der der Zwischenring 45 mit seiner Verzahnung in den Ringspalt zwischen der Außenverzahnung 29 und der Innenverzahnung 36 passt.

Bei dem gezeigten Ausführungsbeispiel wurde davon ausgegangen, dass die Verzahnungen, die miteinander in Eingriff stehen, außerhalb der Trägerplatte angeordnet sind. Dies erleichtert in gewisser Weise die Montage. Es ist jedoch auch grundsätzlich denkbar die Innenverzahnung 36 in die Aufnahmebohrung 20 zu verlegen. Die Funktionsweise ist dann grundsätzlich die gleiche, lediglich die Justage gestaltet sich etwas anders, indem nämlich der Achsträger mit dem richtigen Drehwinkel in die gezahnte Aufnahmebohrung eingesteckt werden muss. Die Sicherungsplatte mit der Innenverzahnung kann dann entfallen.

Die Erfindung gestattet nicht nur einen Toleranzausgleich sondern auch die Anpassung an verschieden breite Schienenköpfe.

Eine Führungsrollenanordnung für Brückenkräne sieht zwei drehbar gelagerte Achsträger vor, auf denen die Führungsrollen sitzen. Die Führungsrollen sind auf Achszapfen angeordnet, die exzentrisch zur Drehachse des Achsträgers in der Trägerplatte angeordnet sind. Mit Hilfe von Verzahnungen an dem Achsträger und an der Trägerplatte kann die gewählte Exzenterlage des Achszapfens formschlüssig fixiert werden.

## Patentansprüche

1. Führungsrollenanordnung für Krankopfträger (7), die mit Laufrädern (10) auf Kranschienen (2) laufen,
mit einer Trägerplatte (15), die wenigstens eine Aufnahmeöffnung (20), deren Längsachse (41) im montierten Zustand neben der Kranschiene (2) verläuft,
mit einem Achsträger (21), der in der zugeordneten Aufnahmeöffnung (20) sitzt, auf dem wenigstens eine Führungsrolle (11,12) drehbar gelagert ist und der im axialen Abstand von der Führungsrolle (11,12) auf seiner Außenseite in einem Bereich eine längs eines Kreises ausgebildete Außenverzahnung (29) trägt, wobei die Achse (42) der wenigstens einen Führungsrolle (11,12) des Achsträgers (21) gegenüber der Achse (41) des Kreises, längs dem sich die Außenverzahnung (29) erstreckt, achsparallel seitlich versetzt ist, und
mit wenigstens einer Innenverzahnung (36) an der Trägerplatte (15), deren Zähnezahl ein ganzzahliges Vielfaches der Zähnezahl der Außenverzahnung (29) auf dem Achsträger (21) ist und der Fußkreisdurchmesser der Innenverzahnung (36) mit dem Kopfkreisdurchmesser der Außenverzahnung (29) übereinstimmt.

2. Führungsrollenanordnung für Krankopfträger (7), die mit Laufrädern (10) auf Kransschienen (2) laufen,
mit einer Trägerplatte (15), die wenigstens eine Aufnahmeöffnung (20), deren Längsachse im montierten Zustand neben der Kranschiene (2) verläuft,
mit einem Achsträger (21), der in der zugeordneten Aufnahmeöffnung (20) sitzt, auf dem wenigstens eine Führungsrolle (11,12) drehbar gelagert ist und der im axialen Abstand von der Führungsrolle (11,12) auf seiner Außenseite in einem Bereich eine längs eines Kreises umlaufende Außenverzahnung (29) trägt, wobei die Achse (42) der wenigstens einen Führungsrolle (11,12) des Achsträgers (21) gegenüber der Achse des Kreises, längs dem sich die Außenverzahnung (29) erstreckt, achsparallel seitlich versetzt ist, und
mit wenigstens einer Innenverzahnung (36) an der Trägerplatte (15), deren Kopfkreisdurchmesser unter Ausbildung eines Ringspalts größer ist als der Kopfkreisdurchmesser der Außenverzahnung (29), und
mit einem Zwischenring (45), der in dem Ringspalt sitzt und
der eine Innen- und eine Außenverzahnung (46,47) aufweist, wobei sich am Zwischenring (45) die Zähnezahl der Innenverzahnung (46) von der Zähnezahl der Außenverzahnung (47) um wenigstens einen Zahn unterscheidet und wobei die Zähnezahl der Innenverzahnung (46) des Rings (45) eine ganzzahliges Vielfaches der zähnezahl der Außenverzahnung (29) auf dem Achsträger (21) ist.

3. Führungsrollenanordnung nach Anspruch 1 oder 2, **dadurch gekennzeichnet, dass** die Trägerplatte (15) zwei Aufnahmeöffnungen (20) enthält, zwischen deren Achsen (41) die Kranschiene (2) verläuft.

4. Führungsrollenanordnung nach Anspruch 1 oder 2, **dadurch gekennzeichnet, dass** die Aufnahmeöffnung (20) eine kreisrunde Öffnung ist.

5. Führungsrollenanordnung nach Anspruch 1 oder 2, **dadurch gekennzeichnet, dass** die Trägerplatte (15) abgewinkelt ist und eine Montagefläche (16) für einen Krankopfträger (7) aufweist.

6. Führungsrollenanordnung nach Anspruch 1 oder 2, **dadurch gekennzeichnet, dass** der Achsträger (21) einen Achsstummel (22) aufweist, auf dem die Führungsrolle (11,12) gelagert ist.

7. Führungsrollenanordnung nach Anspruch 1 oder 2, **dadurch gekennzeichnet, dass** die Führungsrolle (11,12) über Wälzkörper (23) auf dem Achsstummel (22) gelagert ist.

8. Führungsrollenanordnung nach Anspruch 1 oder 2, **dadurch gekennzeichnet, dass** der Achsträger (21) einen Längsabschnitt (27) aufweist, dessen Durchmesser an den Durchmesser der Aufnahmeöffnung (20) angepasst ist.

9. Führungsrollenanordnung nach Anspruch 1 oder 2, **dadurch gekennzeichnet, dass** sich die Außenverzahnung (29), gegebenfalls mit Ausnahme eines möglicherweise vorhandene zylindrischen Bereiches (27) und des Achsstummels (22) über die gesamte Länge des Achsträgers (21) fortsetzt.

10. Führungsrollenanordnung nach Anspruch 1 oder 2, **dadurch gekennzeichnet, dass** die Außenverzerzahnung (29) von den Ecken eines Sechsecks oder Achtecks gebildet ist.

11. Führungsrollenanordnung nach Anspruch 1 oder 2, **dadurch gekennzeichnet, dass** der Achsversatz zwischen der Achse (42) der Führungsrolle (22) und der Achse (41) des Kreises längs dem die Außenverzahnung verläuft zwischen 3 mm und 10 mm oder 25 mm liegt.

12. Führungsrollenanordnung nach Anspruch 1 oder 2, **dadurch gekennzeichnet, dass** die Zähnezahl der Innenverzahnung (36,46), die mit der Außenverzahnung (29) in Eingriff steht, um einen Faktor größer ist als die Zähnezahl der Außenverzahnung (29), der zwischen 2 und 20, vorzugsweise zwischen 4 und 8 liegt.

13. Führungsrollenanordnung nach Anspruch 1 oder 2, **dadurch gekennzeichnet, dass** die Innenverzahnung (36) für den Achsträger (21) oder den Zwischenring (45) in einer Sicherungsplatte (33) ausgebildet ist, dass die Trägerplatte (15) wenigstens eine Befestigungsöffnung (37) enthält, die neben der Aufnahmeöffnung (20) vorgesehen ist, und dass die Sicherungsplatte (33) eine Befestigungsöffnung (37) aufweist, die im montierten Zustand mit der Befestigungsöffnung in der Trägerplatte (15) fluchtet.

14. Führungsrollenanordnung nach Anspruch 1 oder 2, **dadurch gekennzeichnet, dass** die Innenverzahnung (36) für den Achsträger (21) oder den Zwischenring (45) in der Trägerplatte (15) ausgebildet ist.

15. Führungsrollenanordnung nach Anspruch 13, **dadurch gekennzeichnet, dass** die Sicherungsplatte (33) oder die Trägerplatte (15) wenigstens zwei Befestigungsöffnungen (37a,37b) aufweist, die längs einem Umfangswinkel bezogen auf die Achse (41) der Innenverzahnung (36) um einen Winkel gegeneinander versetzt sind, der ein Vielfaches des Winkels zwischen zwei benachbarten Zähnen der Innenverzahnung (36) zuzüglich dem halben Winkel zwischen benachbarten Zähnen der Innenverzahnung (36) ist.

16. Führungsrollenanordnung nach Anspruch 13, **dadurch gekennzeichnet, dass** zwischen der Sicherungsplatte (33) und der Trägerplatte (15) eine Distanzplatte eingefügt ist.

17. Führungsrollenanordnung nach Anspruch 1 oder 2, **dadurch gekennzeichnet, dass** der Achsträger (21) eine koaxiale Gewindebohrung (31) enthält.

18. Führungsrollenanordnung nach Anspruch 13, **dadurch gekennzeichnet, dass** auf der von der Führungsrolle (11,12) abliegenden Seite der Sicherungsplatte (33) eine Deckelplatte vorgesehen ist, die eine Durchgangsbohrung enthält.

19. Führungsrollenanordnung nach Anspruch 13, **dadurch gekennzeichnet, dass** die Befestigungsöffnung eine Gewindebohrung ist.

20. Führungsrollenanordnung nach Anspruch 13, **dadurch gekennzeichnet, dass** der Kopfkreisdurchmesser der Außenverzahnung (29) auf dem Achsträger (21) größer ist als der Durchmesser der Aufnahmebohrung (20).

## Claims

1. Guide roller arrangement for crane end carriages (7), which run on track wheels (10) on crane rails (2),
with a carrier plate (15), which [has?] at least one receiving opening (20), the longitudinal axis (41) of which runs adjacent to the crane rail (2) in the assembled state,
with an axle support (21), which sits in the associated receiving opening (20), on which at least one guide roller (11, 12) is rotatably mounted, and which in one region on its outer surface bears an external tooth system (29) configured along a circle at an axial distance from the guide roller (11, 12), wherein the axis (42) of the at least one guide roller (11, 12) of the axle support (21) is displaced laterally in axis-parallel direction in relation to the axis (41) of the circle along which the external tooth system (29) extends, and
with at least one internal tooth system (36) on the carrier plate (15), the number of teeth of which is a whole-number multiple of the number of teeth of the external tooth system (29) on the axle support (21) and the root diameter of the internal tooth system (36) is consistent with the tip diameter of the external tooth system (29).

2. Guide roller arrangement for crane end carriages (7), which run on track wheels (10) on crane rails (2),
with a carrier plate (15), which [has?] at least one receiving opening (20), the longitudinal axis of which runs adjacent to the crane rail (2) in the assembled state, with an axle support (21), which sits in the associated receiving opening (20), on which at least one guide roller (11, 12) is rotatably mounted, and which in one region on its outer surface bears an external tooth system (29) running along a circle at an axial distance from the guide roller (11, 12), wherein the axis (42) of the at least one guide roller (11, 12) of the axle support (21) is displaced laterally in axis-parallel direction in relation to the axis of the circle along which the external tooth system (29) extends, and
with at least one internal tooth system (36) on the carrier plate (15), the root diameter of which is larger than the tip diameter of the external tooth system (29) with the formation of an annular gap, and
with an intermediate ring (45), which sits in the annular gap and which has an internal and an external tooth system (46, 47), wherein the number of teeth of the internal tooth system (46) differs from the number of teeth of the external tooth system (47) by at least one tooth, and wherein the number of teeth of the internal tooth system (46) of the ring (45) is a whole-number multiple of the number of teeth of the external tooth system (29) on the axle support (21).

3. Guide roller arrangement according to claim 1 or 2, **characterised in that** the carrier plate (15) contains two receiving openings (20), between the axes (41) of which the crane rail (2) runs.

4. Guide roller arrangement according to claim 1 or 2, **characterised in that** the receiving opening (20) is a circular opening.

5. Guide roller arrangement according to claim 1 or 2, **characterised in that** the carrier plate (15) is angled and has an assembly surface (16) for a crane end carriage (7).

6. Guide roller arrangement according to claim 1 or 2, **characterised in that** the axle support (21) has an axle end (22), on which the guide roller (11, 12) is mounted.

7. Guide roller arrangement according to claim 1 or 2, **characterised in that** the guide roller (11, 12) is mounted on the axle end (22) by means of roll bodies (23).

8. Guide roller arrangement according to claim 1 or 2, **characterised in that** the axle support (21) has a longitudinal section (27), the diameter of which is adapted to the diameter of the receiving opening (20).

9. Guide roller arrangement according to claim 1 or 2, **characterised in that** the external tooth system (29) extends over the entire length of the axle support (21), where applicable except for a possibly present cylindrical region (27) and the axle end (22).

10. Guide roller arrangement according to claim 1 or 2, **characterised in that** the external tooth system (29) is formed by the corners of a hexagon or octagon.

11. Guide roller arrangement according to claim 1 or 2, **characterised in that** the axial offset between the axis (42) of the guide roller (22) and the axis (41) of the circle along which the external tooth system runs lies between 3 mm and 10 mm or 25 mm.

12. Guide roller arrangement according to claim 1 or 2, **characterised in that** the number of teeth of the internal tooth system (36, 46), which stands in engagement with the external tooth system (29), is larger than the number of teeth of the external tooth system (29) by a factor lying between 2 and 20, preferably between 4 and 8.

13. Guide roller arrangement according to claim 1 or 2, **characterised in that** the internal tooth system (36) for the axle support (21) or the intermediate ring (45) is configured in a locking plate (33), that the carrier plate (15) contains at least one fastening opening (37) provided next to the receiving opening (20), and that the locking plate (33) has a fastening opening (37) which in the assembled state is in alignment with the fastening opening in the carrier plate (15).

14. Guide roller arrangement according to claim 1 or 2, **characterised in that** the internal tooth system (36) for the axle support (21) or the intermediate ring (45) is configured in the carrier plate (15).

15. Guide roller arrangement according to claim 13, **characterised in that** the locking plate (33) or the carrier plate (15) has at least two fastening openings (37a, 37b), which are displaced relative to one another along a circumferential angle with respect to the axis (41) of the internal tooth system (36) by an angle, which is a multiple of the angle between two adjacent teeth of the internal tooth system (36) plus half the angle between adjacent teeth of the internal tooth system (36).

16. Guide roller arrangement according to claim 13, **characterised in that** a spacer plate is inserted between the locking plate (33) and the carrier plate (15).

17. Guide roller arrangement according to claim 1 or 2, **characterised in that** the axle support (21) contains a coaxial threaded bore (31).

18. Guide roller arrangement according to claim 13, **characterised in that** a cover plate containing a through-bore is provided on the side of the locking plate (33) remote from the guide roller (11, 12).

19. Guide roller arrangement according to claim 13, **characterised in that** the fastening opening is a threaded bore.

20. Guide roller arrangement according to claim 13, **characterised in that** the tip diameter of the external tooth system (29) on the axle support (21) is larger than the diameter of the receiving bore (20).

## Revendications

1. Système de galet de guidage pour supports de tête de grue (7) qui se déplacent avec des roues de roulement (10) sur des rails de grue (2),
comprenant une plaque-support (15) qui présente au moins une ouverture de montage (20) dont l'axe longitudinal (41) s'étend, à l'état monté, à proximité du rail de grue (2),
comprenant un support d'axe (21) qui est placé dans l'ouverture de montage (20) associée et sur lequel au moins un galet de guidage (11, 12) est monté avec possibilité de rotation, et qui, à distance axiale du galet de guidage (11, 12), porte sur sa face extérieure une denture extérieure (29) réalisée dans une partie le long d'un cercle, l'axe (42) du galet de guidage (11, 12), au nombre d'au moins un, du support d'axe (21) étant décalé latéralement et parallèlement par rapport à l'axe (41) du cercle le long duquel s'étend la denture extérieure (29), et
comprenant au moins une denture intérieure (36) sur la plaque-support (15), dont le nombre de dents correspond à un multiple entier du nombre de dents de la denture extérieure (29) sur le support d'axe (21), le diamètre de pied de la denture intérieure (36) correspondant au diamètre de tête de la denture extérieure (29).

2. Système de galet de guidage pour supports de tête de grue (7) qui se déplacent avec des roues de roulement (10) sur des rails de grue (2),
comprenant une plaque-support (15) qui présente au moins une ouverture de montage (20) dont l'axe longitudinal s'étend, à l'état monté, à proximité du rail de grue (2),
comprenant un support d'axe (21) qui est placé dans l'ouverture de montage (20) associée et sur lequel au moins un galet de guidage (11, 12) est monté avec possibilité de rotation, et qui, à distance axiale du galet de guidage (11, 12), porte sur sa face extérieure une denture extérieure (29) périphérique, réalisée dans une partie le long d'un cercle, l'axe (42) du galet de guidage (11, 12), au nombre d'au moins un, du support d'axe (21) étant décalé latéralement et parallèlement par rapport à l'axe du cercle le long duquel s'étend la denture extérieure (29), et
comprenant au moins une denture intérieure (36) sur la plaque-support (15), dont le diamètre de tête de denture, avec formation d'un espace annulaire, est supérieur au diamètre de tête de la denture extérieure (29), et
comprenant une bague intermédiaire (45) qui est montée dans l'espace annulaire et qui présente une denture intérieure et une denture extérieure (46, 47), le nombre de dents de la denture intérieure (46) de la bague intermédiaire (45) étant différent d'au moins un du nombre de dents de la denture extérieure (47), et le nombre de dents de la denture intérieure (46) de la bague (45) correspondant à un multiple entier du nombre de dents de la denture extérieure (29) sur le support d'axe (21).

3. Système de galet de guidage selon la revendication 1 ou 2, **caractérisé par le fait que** la plaque-support (15) comporte deux ouvertures de montage (20), entre les axes (41) desquelles s'étend le rail de grue (2).

4. Système de galet de guidage selon la revendication 1 ou 2, **caractérisé par le fait que** l'ouverture de montage (20) est une ouverture circulaire.

5. Système de galet de guidage selon la revendication 1 ou 2, **caractérisé par le fait que** la plaque-support (15) a une forme d'équerre et présente une surface de montage (16) pour un support de tête de grue (7).

6. Système de galet de guidage selon la revendication 1 ou 2, **caractérisé par le fait que** le support d'axe (21) présente un tourillon (22) sur lequel est monté le galet de guidage (11, 12).

7. Système de galet de guidage selon la revendication 1 ou 2, **caractérisé par le fait que** le galet de guidage (11, 12) est monté sur le tourillon (22) par l'intermédiaire de corps de roulement (23).

8. Système de galet de guidage selon la revendication 1 ou 2, **caractérisé par le fait que** le support d'axe (21) présente une portion longitudinale (27) dont le diamètre est adapté au diamètre de l'ouverture de montage (20).

9. Système de galet de guidage selon la revendication 1 ou 2, **caractérisé par le fait que** la denture extérieure (29), le cas échéant à l'exception d'une partie cylindrique (27), éventuellement prévue, et du tourillon (22), s'étend sur toute la longueur du support d'axe (21).

10. Système de galet de guidage selon la revendication 1 ou 2, **caractérisé par le fait que** la denture extérieure (29) est constituée par les angles d'un hexagone ou d'un octogone.

11. Système de galet de guidage selon la revendication 1 ou 2, **caractérisé par le fait que** le décalage axial entre l'axe (42) du galet de guidage (22) et l'axe (41) du cercle, le long duquel s'étend la denture extérieure, est compris entre 3 mm et 10 mm ou 25 mm.

12. Système de galet de guidage selon la revendication 1 ou 2, **caractérisé par le fait que** le nombre de dents de la denture intérieure (36, 46), qui engrène avec la denture extérieure (29), est supérieur au nombre de dents de la denture extérieure (29) d'un facteur qui est compris entre 2 et 20, de préférence entre 4 et 8.

13. Système de galet de guidage selon la revendication 1 ou 2, **caractérisé par le fait que** la denture intérieure (36) pour le support d'axe (21) ou la bague intermédiaire (45) est réalisée dans une plaque d'arrêt (33), **par le fait que** la plaque-support (15) comporte au moins une ouverture de fixation (37) qui est prévue à côté de l'ouverture de montage (20), et **par le fait que** la plaque d'arrêt (33) présente une ouverture de fixation (37) qui, à l'état monté, est alignée avec l'ouverture de fixation de la plaque-support (15).

14. Système de galet de guidage selon la revendication 1 ou 2, **caractérisé par le fait que** la denture intérieure (36) pour le support d'axe (21) ou la bague intermédiaire (45) est réalisée dans la plaque-support (15).

15. Système de galet de guidage selon la revendication 13, **caractérisé par le fait que** la plaque d'arrêt (33) ou la plaque-support (15) présente au moins deux ouvertures de fixation (37a, 37b) qui sont décalées l'une par rapport à l'autre, le long d'un angle périphérique par rapport à l'axe (41) de la denture intérieure (36), d'un angle qui correspond à un multiple de l'angle entre deux dents voisines de la denture intérieure (36), augmenté du demi-angle entre des dents voisines de la denture intérieure (36).

16. Système de galet de guidage selon la revendication 13, **caractérisé par le fait qu'**une plaque d'écartement est intercalée entre la plaque d'arrêt (33) et la plaque-support (15).

17. Système de galet de guidage selon la revendication 1 ou 2, **caractérisé par le fait que** le support d'axe (21) comporte un trou taraudé (31) coaxial.

18. Système de galet de guidage selon la revendication 13, **caractérisé par le fait que** sur la face de la plaque d'arrêt (33) qui est éloignée du galet de guidage (11, 12), il est prévu une plaque couvercle qui comporte un trou débouchant.

19. Système de galet de guidage selon la revendication 13, **caractérisé par le fait que** l'ouverture de fixation est un trou taraudé.

20. Système de galet de guidage selon la revendication 13, **caractérisé par le fait que** le diamètre de tête de la denture extérieure (29) sur le support d'axe (21) est supérieur au diamètre du trou de montage (20).
